# EUROPEAN PATENT SPECIFICATION

(11) **EP 0 315 150 B1**
(45) Date of publication and mention of the grant of the patent: **19.01.1994**
(21) Application number: 88118260.4
(22) Date of filing: 02.11.1988
(51) Int. Cl.: C08F 8/30

(54) **Imidized acrylic polymers and process for the preparation thereof**
Imidierte Acrylpolymere und Verfahren zur Herstellung davon
Imides de polymères acryliques et leur procédé de préparation

(30) Priority: 04.11.1987 IT 2250687
(43) Date of publication of application: 10.05.1989
(73) Proprietor: ELF ATOCHEM ITALIA S.r.l., 20159 Milano (IT)
(72) Inventor: Canova, Luciano, Dr., I-28100 Novara (IT); Albizzati, Enrico, Dr., I-28041 Arona (NO) (IT); Giannini, Umberto, Dr., I-20100 Milano (IT)
(74) Representative: Weinhold, Peter, Dr.

(56) References cited:
- DE-B- 1 195 952
- DE-B- 1 242 369
- US-A- 4 246 374

## Description

The present invention relates to imidized acrylic polymers and to a process for the preparation thereof.

By the term acrylic polymers or acrylic resins, as used in the present description and claims, the homopolymers and co-polymers and mixtures thereof of alkyl esters of the methacrylic or acrylic acid wherein the alkyl group contains from 1 to 8, preferably 1 to 4, carbon atoms, are intended.

Examples of esters of methacrylic or acrylic acid are: methyl methacrylate, ethyl methacrylate, isopropyl methacrylate, sec.-butyl methacrylate, methyl acrylate, ethyl acrylate, butyl acrylate and isopropyl acrylate.

The acrylic polymers or acrylic resins may contain units derived from other monomers containing double bonds such as styrene, α-methylstyrene, acrylonitrile and acrylamide, or from monomers containing two double bonds, such as for instance butadiene. Such monomer units are usually present in amounts of less than 50, preferably less than 20 mol percent, based on the total amount of (meth)acrylic and other monomer units.

Furthermore, these polymers have inherent viscosities, measured in N,N'-dimethylformamide at 30°C, between 0.01 and 7, preferably between 0.2 and 2.

The main drawback shown by these polymers is that they have a rather low glass transition temperature (Tg), which limits significantly the use of these polymers.

It is known from US-A-3,284,425 or from GB-A-926,629 to increase the Tg or these polymers by imidation by reacting them with ammonium hydroxide, ammonium phosphate or alkyl amines or by partial reaction of the acrylic resin itself with ammonium hydroxide, followed by reaction with an alkylamine. These processes show different drawbacks: they are performed in an autoclave, they are of the discontinuous type, they require heating times and reaction times generally very long, and they involve the use of dissolution agents or suspending agents.

In order to overcome these drawbacks, a process for the preparation of acrylic polymers imidized in an extruder, using ammonia in aqueous phase, has been suggested in the DE-A-1,077,872. However, the product thus obtained has a poor thermal stability and requires further treatments before being used in the transformation processing.

The DE-B-1,195,952 and DE-B-1,242,369 describe processes for the preparation of polymethacrylic acid imides and N-alkyl polymethacrylic acid imides by reacting polymethacrylic acid esters with ammonium salt solutions or alkylammonium salt solutions, respectively. Both processes are of the discontinuous type. They require long treating times and usually have to be performed in an autoclave.

In US-A-4,246,374 there is described a process for preparing imidized acrylic polymers, by direct reaction in an extruder, of the acrylic resin with ammonia or with a primary amine under substantially anhydrous conditions.

The product obtained has good thermal stability, but the process conditions for its preparation are particularly burdensome in that it is necessary to work at temperatures up to 450°C and under pressures up to 1,000 atmospheres.

It has now been discovered (in accordance with the present invention) that the above-mentioned drawbacks can be overcome by a process for the preparation of imidized acrylic polymers comprising reacting homopolymers and copolymers of C₁-C₈ alkyl esters of methacrylic or acrylic acid either in the molten state or dissolved in a solvent, with at least one modifier of general formula (I): 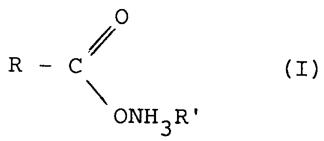
wherein R and R', the same or different, are selected from hydrogen and alkyl, cycloalkyl, aryl, alkylaryl and arylalkyl radicals having from 1 to 20 carbon atoms and the corresponding heterosubstituted radicals containing heteroatoms as substituents of at least one hydrogen and/or inserted between at least two adjacent carbon atoms, in the absence of water or polyalcohols as solvents.

Examples of heteroatoms are nitrogen, oxygen, sulphur and halogens.

Preferred groups R and R' are (beside hydrogen):
alkyl groups having 1 to 8, particularly 1 to 4 carbon atoms, such as e.g. methyl, ethyl, n-propyl, i-propyl, n-butyl, i-butyl and sec.-butyl;
cycloalkyl groups having 3 to 8 carbon atoms, such as e.g. cyclopentyl and cyclohexyl;
aryl groups having 6 to 14 carbon atoms, such as e.g. phenyl, naphthyl and biphenylyl;
alkylaryl groups having 7 to 15 carbon atoms, such as e.g. tolyl, xylyl,trimethylphenyl, ethylphenyl, propylphenyl, and methylnaphthyl;
arylalkyl groups having 7 to 15 carbon atoms, such as e.g. benzyl, phenethyl and naphthylmethyl.

Heteroatom containing groups R and R' are e.g. the above mentioned groups substituted with 1 to 3 substituents selected from halogen atoms (e.g. F, Cl, Br and J) (e.g. chloromethyl, dichloromethyl, trichloromethyl, chloroethyl, trifluoromethyl, chlorophenyl), hydroxy groups and alkoxy groups having 1 to 4 carbon atoms (e.g. hydroxymethyl, hydroxyethyl, hydroxyphenyl, anisyl), NH₂ groups and mono- and dialkylamino groups, wherein the alkyl groups have 1 to 4 carbon atoms.

Cyclic, hetero atom containing groups, such as e.g. pyridyl, furanyl, imidazolyl, pyrrolyl, thiophenyl, piperidinyl, tetrahydrofuryl and correspondingly substituted derivatives thereof may also serve as groups R and R'.

Examples of modifiers of the formula (I) are: ammonium formate, ammonium acetate, ammonium benzoate, ammonium p-anisate, ammonium propionate, ammonium butyrate, N-methylammonium formate, N-ethylammonium acetate, N-cyclohexylammonium benzoate and N-phenylammonium formate.

The imidized acrylic polymers obtained by the process of the present invention show a very good thermal stability and an inherent viscosity, measured in N,N'-dimethylformamide at 30°C in a 0.25% by weight solution, between 0.01 and 7, and generally between 0.2 and 2, and have a nitrogen content between 0.1 and 9% by weight, and generally between 0.5 and 7%.

A method for preparing the imidized acrylic polymers of the present invention comprises reacting an acrylic polymer and the modifier of the formula (I) at atmospheric pressure or at subatmospheric pressure (e.g. a pressure somewhat lower than atmospheric pressure) and at a temperature higher than the melting temperature of the acrylic polymer.

Atmospheric pressure and reaction temperatures between 200° and 350°C, and preferably between 220° and 280°C, are those generally used.

The modifier is used in amounts between 5 and 60% by mols, based on the (meth)acrylic monomeric unit, and preferably between 10 and 50%.

According to a preferred embodiment of the process of the present invention, the reaction between the acrylic polymer and the modifier of formula (I) is carried out in the presence of basic, acid and/or transesterification catalysts.

These catalysts are products having a high boiling temperature and are stable under the reaction conditions. They are chosen preferably among the tertiary amines such as tricyclohexylamine, 1,1,3,3-tetramethylguanidine, 1,3-diphenylguanidine, quinoline, isoquinoline, 4-benzylpyridine, 4-phenylpyridine, 2,3-benzodiazine, 1,4-benzodiazine, 1-benzazine, 1,3-benzodiazine, N,N'-dicyclohexylcarbodiimide, 2,2'-bipyridyl, 2,3'-bipyridyl, 2,4'-bipyridyl, or among Sb₂O₃, Ti(OC₄H₉)₄, NaNH₂, SnO₂, potassium or sodium alcoholates, manganese acetate, etc.

The catalysts may be used in amounts up to 30% by weight, based on the total reaction mixture.

According to a further preferred embodiment of the process of the present invention, the reaction between the acrylic polymer and the modifier of the formula (I) may be carried out in an extruder, in a mixer, or in similar apparatus suitably equipped with devices for degasing.

The process of the present invention may be carried out using the acrylic polymer either in the molten state or dissolved in a suitable solvent, for instance a solvent of the aromatic or cycloaliphatic type such as benzene, toluene, cyclohexane, etc.

The acrylic polymers of the present invention may be processed using conventional technologies for the transformation of the thermoplastic polymers such as for instance extrusion, injection molding, etc., and may be used for the manufacture of manufactured articles of any shape and/or size, optionally in admixture with other thermoplastic resins. Furthermore, these polymers may be used for the preparation of plates, films, pipes, yarns, etc.

The imidized acrylic polymers obtained at the end of the process of the present invention may be mixed with suitable additives such as, for instance, antishock products, pigments, fibers, mineral fillers, flame retarders, stabilizers, lubricants, plastifiers, etc.

The polymers of the present invention may be additioned with expanding agents and used in the foamed form and, optionally, further mixed with fibers and/or inorganic fillers, to produce articles having a low density and high mechanical properties.

The glass transition temperature (Tg) is measured using the differential calorimeter and is the temperature corresponding to the inflection which appears in the thermogram when the thermal capacity of the material varies. The scanning velocity of the temperature is 20°C/minute and the measurement is carried out after first heating to 200°C and subsequent cooling.

In order still better to understand the present invention and to practice the same, some illustrative but not limitative examples are given below.

### Example 1

Into a glass reactor provided with stirrer and outlet for the volatile compounds, 25 g of a co-polymer containing 98% by weight of methyl methacrylate and 2% by weight of methyl acrylate, having an inherent viscosity in chloroform of 0.5, and 34.8 g of ammonium benzoate are introduced at the same time, under nitrogen. The whole is heated gradually until melting and thereafter up to 240°C, by distilling and removing the volatile reaction products.

The reaction is carried out at 240°C for about 3 hours and thereafter subjected to vacuum by a mechanical pump for 15 minutes. The mixture is then cooled and refluxed with nitrogen and the reaction product is diluted with 50 ml of N,N'-dimethylformamide (DMF) to obtain a solution from which the polymer is recovered by coagulation with methanol.

The thus-obtained product is filtered off, washed with ether and dried under vacuum.

The polymer product has an inherent viscosity in DMF at 30°C in a 0.25% by weight solution of 0.32, a nitrogen content of 0.7% by weight, and a glass transition temperature (Tg) = 125°C.

Furthermore, the polymer product when analyzed by the thermogravimetric analysis (TGA), measured by allowing the sample to undergo a temperature increase of 20°C/minute under nitrogen, shows a weight loss of 0.45% in the temperature range between 50° and 300°C

### Example 2

Here is employed the same procedure as in Example 1, using 70 g of ammonium benzoate and working at a temperature of about 260°C.

The polymer product thus obtained has an inherent viscosity of 0.30, a nitrogen content of 1.68% by weight, and a Tg=132°C.

### Example 3

Again is employed the same procedure as in Example 1, using 38.5 g of ammonium acetate and working at a beginning temperature of 160°C and at an ending temperature of 220°C.

The polymer product thus obtained has an inherent viscosity of 0.32, a nitrogen content of 0.25% by weight, and a Tg=123°C.

## Claims

1. Process for the preparation of imidized acrylic polymers, comprising reacting homopolymers and copolymers of C₁-C₈ alkyl esters of methacrylic or acrylic acid either in the molten state or dissolved in a solvent, with at least one modifier of general formula (I): 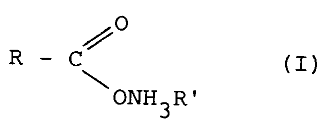 wherein R and R', the same or different, are selected from hydrogen and alkyl, cycloalkyl, aryl, alkylaryl and arylalkyl radicals having from 1 to 20 carbon atoms and the corresponding heterosubstituted radicals containing heteroatoms as substituents of at least one hydrogen and/or inserted between at least two adjacent carbon atoms,
in the absence of water or polyalcohols as solvents.

2. Process according to claim 1, wherein the heteroatoms are selected from nitrogen, oxygen, sulphur and halogen.

3. Process according to claim 1 or 2, wherein the modifiers of the formula (I) are selected from ammonium formate, ammonium acetate, ammonium benzoate, ammonium anisate, ammonium propionate, ammonium butyrate, N-methylammonium formate, N-ethylammonium acetate, N-cyclohexylammonium benzoate and N-phenylammonium formate.

4. Process according to one or more of claims 1 to 3, wherein imidized acrylic polymers having a very good thermal stability, an inherent viscosity, in dimethylformamide at 30°C in a 0.25% by weight solution, between 0.01 and 7, and a nitrogen content between 0.1 and 9% by weight are produced.

5. Process according to one or more of claims 1 to 4, wherein the reaction between acrylic polymer and modifier of formula (I) is carried out at atmospheric pressure or only a little less than atmospheric pressure, and at a temperature higher than the melting temperature of the acrylic polymer.

6. Process according to claim 5, wherein the reaction is carried out under atmospheric pressure and at a temperature between 200 and 350°C.

7. Process according to claim 6, wherein the temperature is between 220 and 280°C.

8. Process according to any one of claims 5 to 7, wherein the modifier is used in amounts between 5 and 60% by mols, calculated on the acrylic monomeric unit.

9. Process according to claim 8, wherein the modifier is used in amounts between 10 and 50% by mols.

10. Process according to one or more of claims 5 to 9, wherein the reaction between the acrylic polymer and the modifier of formula (I) is carried out in the presence of basic, acidic and/or transesterification catalysts.

11. Process according to claim 10, wherein the catalyst is selected from tertiary amines, such as tricyclohexylamne, 1,1,3,3-tetramethylguanidine, 1,3-diphenylguanidine, quinoline, isoquinoline, 4-benzylpyridine, 4-phenylpyridine, 2,3-benzodiazine, 1,4-benzodiazine, 1-benzazine, 1,3-benzodiazine, N,N'-dicyclohexylcarbodiimide, 2,2'-bipyridyl, 2,3'-bipyridyl, 2,4'-bipyridyl, Sb₂O₃, Ti(OC₄H₉)₄, NaNH₂, SnO₂, sodium and potassium alcoholates, and manganese acetate.

12. Process according to one or more of claims 5 to 11, wherein the reaction between the acrylic polymer and the modifier of formula (I) is carried out in an extruder, in a mixer, or in similar apparatus provided with means for degasing.

## Patentansprüche

1. Verfahren zur Herstellung von imidierten Acrylpolymeren, welches das Umsetzen von Homopolymeren und Copolymeren von C₁-C₈-Alkyl-estern der Methacrylsäure oder Arcylsäure entweder in geschmolzenem Zustand oder in einem Lösungsmittel gelöst, mit wenigstens einer Reglersubstanz der allgemeinen Formel (I): 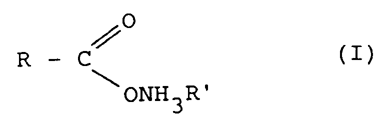 umfaßt, worin R und R', die gleich oder verschieden sein können, ausgewählt werden aus Wasserstoff und Alkyl-, Cycloalkyl-, Aryl-, Alkylaryl- und Arylalkyl-Radikalen mit 1 bis 20 Kohlenstoffatomen und den entsprechenden heterosubstituierten Radikalen, die Heteroatome als Substituenten von wenigstens einem Wasserstoffatom und/oder zwischen wenigstens zwei benachbarten Kohlenstoffatomen eingefügt enthalten,
in Abwesenheit von Wasser oder Polyalkoholen als Lösungsmittel.

2. Verfahren nach Anspruch 1, worin die Heteroatome ausgewählt werden aus Stickstoff, Sauerstoff, Schwefel und Halogen.

3. Verfahren nach Anspruch 1 oder 2, worin die Reglersubstanz der Formel (I) ausgewählt wird aus Ammoniumformiat, Ammoniumacetat, Ammoniumbenzoat, Ammoniumanisat, Ammoniumpropionat, Ammoniumbutyrat, N-Methylammoniumformiat, N-Ethylammoniumacetat, N-Cylohexylammoniumbenzoat und N-Phenylammoniumformiat.

4. Verfahren nach einem der Ansprüche 1 bis 3, wonach imidierte Acrylpolymere mit einer sehr guten thermischen Stabilität, einer logarithmischen Viskositätszahl (in Dimethylformamid bei 30° C in einer Lösung von 0,25 Gew.-%) zwischen 0,01 und 7 und einem Sticktoffgehalt von 0,1 bis 9 Gew.-% hergestellt werden.

5. Verfahren nach einem der Ansprüche 1 bis 4, wonach die Reaktion zwischen dem Acrylpolymer und der Reglersubstanz der Formel (I) bei atmosphärischem Druck oder etwas weniger als atmosphärischem Druck und bei einer Temperatur, die höher ist als die Schmelztemperatur des Acrylpolymers, erfolgt.

6. Verfahren nach Anspruch 5, wonach die Reaktion bei atmosphärischem Druck und einer Temperatur zwischen 200 und 350° C erfolgt.

7. Verfahren nach Anspruch 6, wonach die Temperatur zwischen 220 und 280 ° C beträgt.

8. Verfahren nach einem der Ansprüche 5 bis 7, wonach die Reglersubstanz in Mengen zwischen 5 und 60 Mol-%, bezogen auf die Acrylmonomereinheit, verwendet wird.

9. Verfahren nach Anspruch 8, wonach die Reglersubstanz in Mengen zwischen 10 und 50 Mol-% verwendet wird.

10. Verfahren nach einem der Ansprüche 5 bis 9, worin die Reaktion zwischen dem Acrylpolymer und der Reglersubstanz der Formel (I) in Anwesenheit von basischen, sauren und/oder Umesterungs-Katalysatoren durchgeführt wird.

11. Verfahren nach Anspruch 10, worin der Katalysator ausgewählt wird unter tertiären Aminen wie Tricyclohexylamin, 1,1,3,3-Tetramethylguanidin, 1,3-Diphenylguanidin, Chinolin, Isochinolin, 4-Benzylpyridin, 4-Phenylpyridin, 2,3-Benzdiazin, 1,4-Benzdiazin, 1-Benzazin, 1,3-Benzdiazin, N,N'-Dicyclohexylcarbodiimid, 2,2'-Bipyridyl, 2,3'-Bipyridyl, 2,4'-Bipyridyl, Sb₂O₃, Ti(OC₄H₉)₄, NaNH₂, SnO₂, Kalium- oder Natrium-Alkoholaten und Manganacetat.

12. Verfahren nach einem der Ansprüche 5 bis 11, wonach die Reaktion zwischen dem Acrylpolymer und der Reglersubstanz der Formel (I) in einem Extruder, einem Mixer oder einer ähnlichen Vorrichtung, die geeignete Entgasungsvorrichtungen aufweist, durchgeführt wird.

## Revendications

1. Procédé pour la préparation de polymères acryliques contenant des groupes imide consistant à faire réagir des homopolymères et copolymères d'ester d'alkyle en C₁-C₈ de l'acide méthacrylique ou acide acrylique soit à l'état fondu, soit dissout dans un solvant, avec au moins un agent modifiant de formule générale (I) : 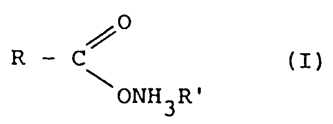 dans laquelle R et R' identiques ou différents sont choisis parmi l'hydrogène et les radicaux alkyle, cycloalkyle, aryle, alkylaryle et aryle alkyle ayant de 1 à 20 atomes de carbone et les radicaux correspondants hétérosubstitués contenant des hétéroatomes substituant au moins un hydrogène et/ou insérés entre au moins deux atomes de carbone, en l'absence d'eau ou d'alcools polyhydroxylés comme solvants.

2. Procédé selon la revendication 1, dans lequel les hétéroatomes sont choisis parmi azote, oxygène, soufre et halogène.

3. Procédé selon la revendication 1 ou 2, dans lequel les agents modifiants de formule (I) sont choisis parmi formate d'ammonium, acétate d'ammonium, benzoate d'ammonium, anisate d'ammonium, propionate d'ammonium, butyrate d'ammonium, formate de N-méthylammonium, acétate de N-méthylammonium, benzoate de N-cyclohexylammonium et formate de N-phénylammonium.

4. Procédé selon l'une quelconque des revendications 1 à 3, dans lequel sont produits des polymères acryliques contenant des fonctions imides présentant une très bonne stabilité thermique, une viscosité inhérente dans le diméthylformamide à 30°C dans une solution à 0,25% en poids, entre 0,01 et 7 et une teneur en azote entre 0,1 et 9% en poids.

5. Procédé selon l'une quelconque des reendications 1 à 4, dans lequel la réaction entre le polymère acrylique et l'agent modifiant de formule (I) est réalisée à pression atmosphérique ou légèrement inférieure à la pression atmosphérique et à une température supérieure à la température de fusion du polymère acrylique.

6. Procédé selon la revendication 5, dans lequel la réaction est réalisée sous pression atmosphérique et à une température située entre 200 et 350°C.

7. Procédé selon la revendication 6, dans lequel la température est située entre 220 et 280°C.

8. Procédé selon l'une quelconque des revendications 5 à 7, dans lequel l'agent modifiant est utilisé dans des quantités situées entre 5 et 60% en moles, calculées sur la base de l'unité acrylique monomère.

9. Procédé selon la revendication 8, dans lequel l'agent modifiant est utilisé dans des quantités variant entre 10 et 50% en moles.

10. Procédé selon l'une quelconque des revendications 5 à 9, dans lequel la réaction entre le polymère acrylique et l'agent modifiant de formule (I) est réalisée en présence de catalyseurs basique, acide et/ou des catalyseurs de trans-estérification.

11. Procédé selon la revendication 10, dans lequel le catalyseur est choisi parmi amines tertiaires telles que la tricyclohexylamine, la 1,1,3,3-tétraméthylguanidine, la 1,3-diphénylguanidine, la quinoline, l'isoquinoline, la 4-benzylpyridine, la 4-phénylpyridine, la 2,3-benzodiazine, la 1,4-benzodiazine, la 1-benzazine, la 1,3-benzodiazine, le N,N'-dicyclohexylcarbodiimide, le 2,2'-bipyridile, le 2,3'-bipyridyle, le 2,4'-bipyridyle, Sb₂O₃, Ti(OC₄H₉)₄, NaNH₂, SnO₂, les alcoolates de sodium et potassium et l'acétate de manganèse.

12. Procédé selon l'une quelconque des revendications 5 à 11, dans lequel la réaction entre le polymère acrylique et l'agent modifiant de formule (I) est réalisée dans une extrudeuse dans un mixeur ou dans un appareil analogue pourvu d'un moyen de dégazage.
